# EUROPEAN PATENT SPECIFICATION

(11) **EP 4 208 823 B1**
(45) Date of publication and mention of the grant of the patent: **04.11.2026**
(21) Application number: 21742791.3
(22) Date of filing: 06.07.2021
(51) Int. Cl.: G06N 3/094, G06N 3/045

(54) **A METHOD FOR CONTROLLING A DRIVER ASSISTANCE SYSTEM DURING OPERATION OF A VEHICLE**
VERFAHREN ZUR STEUERUNG EINES FAHRERASSISTENZSYSTEMS WÄHREND DES BETRIEBS EINES FAHRZEUGS
PROCÉDÉ DE COMMANDE D'UN SYSTÈME D'AIDE À LA CONDUITE PENDANT LE FONCTIONNEMENT D'UN VÉHICULE

(30) Priority: 02.09.2020 DE 102020211097
(43) Date of publication of application: 12.07.2023
(73) Proprietor: VOLKSWAGEN AKTIENGESELLSCHAFT, 38440 Wolfsburg (DE)
(72) Inventor: KAPOOR, Nikhil, 38440 Wolfsburg (DE); SCHNEIDER, Jan David, 38446 Wolfsburg (DE); VARGHESE, Serin, 38126 Braunschweig (DE)
(86) International application number: PCT/EP2021/068721
(87) International publication number: WO 2022/048812

(56) References cited:
- ZIFAN WANG ET AL: "Towards Frequency-Based Explanation for Robust CNN", ARXIV.ORG, CORNELL UNIVERSITY LIBRARY, 201 OLIN LIBRARY CORNELL UNIVERSITY ITHACA, NY 14853, 6 May 2020 (2020-05-06), XP081669933
- FUJIYOSHI HIRONOBU ET AL: "Deep learning-based image recognition for autonomous driving", IATSS RESEARCH, vol. 43, no. 4, 6 December 2019 (2019-12-06), AMSTERDAM, NL, pages 244 - 252, XP055849207, ISSN: 0386-1112, DOI: 10.1016/j.iatssr.2019.11.008
- ANDREAS RESCHKA ET AL: "A surveillance and safety system based on performance criteria and functional degradation for an autonomous vehicle", INTELLIGENT TRANSPORTATION SYSTEMS (ITSC), 2012 15TH INTERNATIONAL IEEE CONFERENCE ON, IEEE, 16 September 2012 (2012-09-16), pages 237 - 242, XP032264014, ISBN: 978-1-4673-3064-0, DOI: 10.1109/ITSC.2012.6338682

## Description

The invention is related to a method for controlling a driver assistance system during operation of a, especially partially automated, fully automated or autonomous, vehicle according to the independent method claim. Further, the invention is related to an electronic control unit according to the independent device claim. Furthermore, the invention is related to a vehicle comprising a corresponding electronic control unit according to the second device claim. Moreover, the invention is related to a computer program product for a corresponding method according to the independent product claim.

Modern driver assistance systems, used for partial- or fully automated driving, commonly use machine learning to assess the vehicle surroundings, including objects, pedestrians and other vehicles. Using deep neural networks, different types of sensor data (camera, radar, lidar) can be processed to produce a world model of the surrounding environment. As part of the perception chain, neural networks are used for different tasks such as semantic segmentation or object detection. For semantic segmentation, the neural network outputs a pixel-wise labelling of the input images according to a pre-defined set of class labels, while networks for object detection render bounding boxes around the objects of defined target classes. In both cases, state-of-the-art neural networks can be for example convolutional neural networks which parameterize a number of weights during training with respect to the input using ground truth data. Using gradient based optimization, the parameters can be tuned and the underlying function is optimized such that the loss quantified by a loss function is minimized. In an iterative training process, the neural network learns a function representing the mapping from the input to output data. State-of-the-art models usually consist of various layers with high numbers of filters, typically resulting in a very large number of trainable parameters and thus learn a complex high-dimensional underlying function. While neural networks outperform classical computer vision approaches for image processing, the neural networks come with a number of challenges. This includes that most neural networks are susceptible to so-called adversarial attacks. Adversarial attacks refer to the application of hand-crafted noise to input images. However, in contrast to random perturbations, this noise is optimized towards a misclassification of the input by the neural networks. This way, the addition of the adversarial perturbation to the input leads to a drastic drop in accuracy of the neural network. Depending on various factors, the adversarial attack can potentially lead to malfunction of the neural network and thus, as a consequence, impact the perception capabilities of the automated driving function.

Since the reliable perception of the environment is safety-critical for automated driving, malfunction of the neural networks may endanger the safety of the automated vehicle.

Some known solutions are based on hardening neural networks against adversarial attacks.

However, such solutions need a lot of computational power. Since self-driving systems requires real-time applications, the hardened neural networks are not practicably in the self-driving systems.

Also, adversarial attack detectors are known, such as feature squeezing (Feature Squeezing: Detecting Adversarial Examples in Deep Neural Networks, Weilin Xu, David Evans, Yanjun Qi University of Virginia evadeML.org, In Network and Distributed Systems Security Symposium (NDSS) 2018, San Diego, February 2018). Such adversarial attack detectors modify the input slightly using traditional computer vision techniques, such as bit-depth reduction, non-local means smoothing, jpeg compression, median smoothing etc. that modify the input in small ways, thereby hoping to remove the adversarial perturbations in return. However, the feature squeezing techniques do not work under strong attacks.

ZIFAN WANG ET AL: "Towards Frequency-Based Explanation for Robust CNN",ARXIV.ORG, CORNELL UNIVERSITY LIBRARY, 201 OLIN LIBRARY CORNELL UNIVERSITY ITHACA, NY 14853, 6 May 2020 (2020-05-06), teaches deep neural networks explanation techniques and an analysis of the connection between the distribution of frequency components in the input dataset and the reasoning process the model learns from the data.

ANDREAS RESCHKA ET AL: "A surveillance and safety system based on performance criteria and functional degradation for an autonomous vehicle",INTELLIGENT TRANSPORTATION SYSTEMS (ITSC), 2012 15TH INTERNATIONAL IEEE CONFERENCE ON, IEEE, 16 September 2012 (2012-09-16), pages 237-242, DOI: 10.1109/ITSC.2012.6338682ISBN: 978-1-4673-3064-0 teaches a surveillance and safety approach based on performance criteria and functional degradation, which approach is used in an autonomous vehicle.

Coming up with reliable and effective adversarial detectors that work across a range of noise types and strengths is still considered an unsolved problem. In summary, most of the current solutions do not scale to different attacks and their proposed improvements are only marginal. The aim of the present invention is to provide a method for controlling a driver assistance system during operation of a, especially partially automated, fully automated or autonomous, vehicle with improved accuracy and increased safety. The aim of the present invention is preferably to provide a method for controlling a driver assistance system of a vehicle, which enables detection of adversarial attacks with different attack types, which also works well on clean images, which further enables detection of adversarial attacks with different attack strengths, and which is computationally cheap. Also, the aim of the invention is to provide a corresponding electronic control unit for the vehicle, a corresponding vehicle and a related computer program product for the inventive method.

The invention is defined by the independent claims. Preferred embodiments are defined by the dependent claims.

The driver assistance systems according to the invention are electronic systems that relieve and/or assist drivers by driving and parking functions of the vehicle at least partly or completely. The driver assistance systems use sensors, lidars, radars and/or cameras, providing perception tasks, for example to detect nearby obstacles or driver errors, and respond accordingly. For this aim, the sensors, lidars, radars and/or cameras serve to produce a world model of the surrounding environment of the vehicle. Thus, the driver assistance systems within the meaning of the invention are used for safety and better driving. Safety features serve for example to avoid accidents and collisions. The driver assistance systems provide for example automate lighting, adaptive cruise control, assist in avoiding collisions, incorporate traffic warnings, alert drivers to possible obstacles, assist in lane departure and lane centering, provide navigational assistance and so on.

The driver assistance systems according to the invention use machine learning (based on neural networks) to assess the vehicle surroundings, including objects, pedestrians and other vehicles. Using neural networks, such as deep neural networks, different types of sensor data (camera, radar, lidar) can be processed to produce a world model of the surrounding environment of the vehicle. As part of the perception chain, neural networks are used for different tasks such as semantic segmentation or object detection.

The sensor data can be optical, acoustical and/or electromagnetic data. The data sets can be provided, for example, as pictures of the environment of the vehicle. The data sets can also be called input images within the meaning of the invention. To provide the input images, sensor data of different sensors can be used.

The frequency analysis can be used to receive a, especially discrete, spectrum of frequencies, that is a frequency spectrum of the data set (or with other words of the input image). The techniques of the frequency analysis can be for example discrete Fourier transformation, a discrete cosine transformation and/or Wavelet transformation.

The inventive idea is to perform a frequency analysis of the input images, before the input images are given to the neural network for processing in order to analyze sensor data of the sensor and to provide perception tasks for the vehicle based on the analyzed sensor data. Using frequency analysis, for example a discrete Fourier transformation, the input images will be transformed to the frequency spectrum in the frequency domain (also called frequency space).

The invention recognizes that adversarial attacks lead to notable changes in the frequency spectrum. The frequency space analysis can be used for detecting adversarial attacks present in the data sets. Based on whether or not an adversarial attack is detected in the input images using the inventive detection mechanisms, the invention can provide counter-measures to increase the safety of the driver assistance system during operation of a, especially partially automated, fully automated or autonomous, vehicle.

The data set is (before being processed by the neural network for operating of the vehicle) being transformed to the frequency space using for example a discrete Fourier transformation (DFT). Using such transformation, the input image can be visualized in the frequency space by its frequency spectrum. The data sets (such as input images) often consist of many points, indicating low frequency and high frequency points along different directions of the input image. Unlike in the spatial domain, where the adversarially attacked images look quite similar to their clean counterparts, these images look quite different in the frequency domain. One of the reasons for this, is that an adversarial attack consists of computing an adversarial noise by repeatedly passing (usually linear) noise across the target neural network to solve an iterative gradient based optimization problem. The repeated forward and backward passes are subject to various kinds of sub-sampling and upsampling layers (typically used in a neural network), which lead to noticeable artifacts, which can be observable in the frequency domain as (usually linear) noise. Since, every adversarial image has adversarial noise added on top, these adversarial images tend to have visibly different frequency spectrums from their clean counterparts. Based on this finding, the invention provides different kinds of detectors, that capture precisely the patterns in the frequency domain indicative for adversarial noise and can denoise them systematically for the purposes of the driver assistance system.

Thus, the inventive idea is to utilize the described analysis of frequency space to derive detection mechanisms for adversarial attacks.

Thus, the invention provides a method according to claim 1 for controlling a driver assistance system during operation of a, especially partially automated, fully automated or autonomous, vehicle with improved accuracy and increased safety. The method is suitable for detecting of multiple attack types, will also works well on clean images, which further scales across different attack strengths, and which is computationally very cheap.

Further, the invention may provide a method for controlling a driver assistance system during operation of a vehicle that the method steps 1) to 3) of claim 1 are executed before analyzing the sensor data for providing perception tasks for the vehicle. Thus, it can be ensured that only true, non-manipulated data sets will be processed to analyze sensor data of the sensor and to provide perception tasks for the vehicle. In this way, safety during operation of the vehicle can be drastically increased. If a data set is identified as an adversarially attacked data set, it will not be processed or it can be cleaned-up for further processing or addressed to a special hardened neural network for analyzing.

Furthermore, the invention may provide a method for controlling a driver assistance system during operation of a vehicle that the method steps 1) to 3) of claim 1 are executed periodically. In such a way, an uninterrupted security mechanism against adversarial attacks can be provided.

Moreover, the invention may provide a method for controlling a driver assistance system during operation of a vehicle that the method steps 1) to 3) of claim 1 are executed for each data set of the sensor data during operation of the vehicle. Thus, reliable operation of the driver assistance system can be provided.

Advantageously, the sensor data can comprise camera, lidar and/or radar data. Also, it is possible that the data set can be provided as a picture of the environment of the vehicle. In this manner, intuitive and understandable control mechanism can be provided for the driver assistance system.

Within the meaning of the invention it can be possible, that an electronic control unit uses a deep neural network as the neural network for analyzing the sensor data of the sensor and for providing perception tasks for the vehicle based on the analyzed sensor data. Deep neural networks can be advantageously used for automated driving functions provided by the driver assistance system during operation of the vehicle, for example for creating an environment model of the vehicle.

Besides of this, the invention may provide a method for controlling a driver assistance system during operation of a vehicle that the frequency analysis in step 2) of claim 1 is provided by a discrete Fourier transformation, a discrete cosine transformation and/or Wavelet transformation. Such transformations are proven, easy and computationally cheap technologies to achieve a frequency spectrum of the data set in the frequency space. Providing the frequency spectrum of the data set in the frequency space is much easier, faster and cheaper than hardening of known neural networks. This is advantageous since the self-driving system requires real-time applications on embedded hardware with limited computing capabilities.

Apart from that, the invention may provide a method for controlling a driver assistance system during operation of a vehicle that for detecting the adversarially attacked data set in step 3) the neural network is used, which is also used for analyzing the sensor data of the sensor and for providing perception tasks for the vehicle, and/or for detecting the adversarially attacked data set in step 3) of claim 1 a special detecting neural network is used. Flexible using of the same neural network and/or the special detecting neural network can be advantageously in order to adapt the driver assistance system to customer requirements and embedded hardware conditions in the vehicle. Using multiple neural networks (with different architectures) in an ensemble to validate the driver assistance system output can be advantageous for reliable detection of the adversarially attacked data sets among data sets provided by the sensor.

In addition, the invention may provide a method for controlling a driver assistance system during operation of a vehicle that the neural network and/or the special detecting neural network used for detecting the adversarially attacked data set will be trained in the frequency domain on frequency spectrums of clean data sets and on frequency spectrums of prepared adversarially attacked data sets, especially using different kinds of adversarial attacks, in order to learn differences between the frequency spectrums of the clean data sets and the frequency spectrums of the adversarially attacked data sets in the frequency domain. In this way, the neural network and/or the special detecting neural network can learn the differences in the frequency space between clean and adversarially attacked images over a plurality of possible adversarially attacks. Advantageously, training the neural network and/or the special detecting neural network for detection the adversarially attacked data sets in the frequency domain could not only lead to a detection of the attack as such, but also reveal the type of the attack. Therefore, a secondary, hardened neural network can be found which is known to be robust against this special adversarial attack that is present in the specific case to analyze the data sets in an improved manner.

Further, the invention provides a method for controlling a driver assistance system during operation of a vehicle that for detecting the adversarially attacked data set in step 3) of claim 1 a denoising filter, especially a Wiener filter, is used for denoising the frequency spectrum of the data set in the frequency domain. The Wiener filter can be derived in a statistical fashion by estimating signal-to-noise-ratios between the frequency spectrums of the attacked images and their clean counterparts. These estimated signal-to-noise-ratios can then be used to denoise the frequency spectrums of the input images from the adversarial frequencies in the frequency domain, especially in a multiplicative manner. Since, the denoising filter only suppress adversarial frequencies, it does not modify clean images that significantly, as these images are devoid of adversarial frequencies in the first place. Thus, the derived denoising filter can also be applied to any clean or attacked image. In this way, the frequency spectrums of the clean data sets can be easily distinguished from the frequency spectrums of the manipulated data sets. The comparison between the frequency spectrums (achieved in step 2) of claim 1 and the denoised frequency spectrums (denoised with the help of the denoising filter) can be made in the frequency domain advantageously, since the frequency spectrums shows the modifications in the frequency domain more clearly as the data sets in the spatial domain. However, the comparison between the data sets and cleaned-up data sets can also be made in the spatial domain. An inverse transformation of the denoised frequency spectrums can be used to convert the denoised frequency spectrums back to the spatial domain, thus achieving the cleaned-up data sets.

Furthermore, the invention may provide a method for controlling a driver assistance system during operation of a vehicle that for detecting the adversarially attacked data set in step 3) of claim 1 the frequency spectrum of the data set will be compared with a denoised frequency spectrum (for example denoised with the help of the denoising filter), wherein especially a threshold will be applied by comparing the frequency spectrum of the data set with the denoised frequency spectrum, wherein preferably the attacked data sets will be detected if a difference between the frequency spectrum of the data set and the denoised frequency spectrum is greater than the applied threshold. More specifically, the inventive method can compute metrics such as structural similarity index measure and/or mean squared error for the frequency spectrums of the data sets and for the frequency spectrums of the denoised data sets and apply a suitable, knowingly defined, threshold on these values. Since, the attacked images are changed more drastically compared to the clean images in the frequency space as in the spatial domain, they lead to a greater SSIM increase, and/or a correspondingly to a greater MSE decrease due to denoising, when compared to the input images. Thus, the adversarially attacked data sets can be easily recognized in an easy way and with little computing power.

Moreover, the invention may provide a method for controlling a driver assistance system during operation of a vehicle that if in step 3) of claim 1 an adversarially attacked data set is detected (or in other words the data set (B) of claim 1 is identified as an adversarially attacked data set), at least one following step is provided:
4) initiating an emergency maneuver.

Thus, the safety during the operation of the vehicle can be increased in a drastic but also in an easy way.

The emergency maneuver can comprise at least one of the following measures:
- reducing vehicle speed,
- initiating an emergency stop,
- providing an alarm inside and/or outside of the vehicle,
- activating a manual driving mode, and/or
- deactivate the driver assistance system.

Thus, accidents during the operation of the vehicle can be easily avoided.

Besides of this, the invention provides a method for controlling a driver assistance system during operation of a vehicle that if in step 3) of claim 1 an adversarially attacked data set is detected (or in other words the data set is identified as an adversarially attacked data set, the following step is provided:
5) of claim 1 activating a security mechanism against an adversarial attack. Thus, the manipulated data sets can not only be recognized but also cleaned-up for further processing.

The security mechanism against an adversarial attack can comprise at least one of the following measures:
- activating a pre-processing technique to remove adversarial attack from the data set,
- using a denoising filter for cleaning the adversarially attacked data set,
- using a hardened neural network for analyzing the adversarially attacked data set,
- using multiple other neural networks with different architectures in an ensemble and performing a consolidation of their output for analyzing the adversarially attacked data set,
- applying rule-based technique for analyzing the adversarially attacked data set, i.e. using external, human-readable devices,
- requesting a user of the vehicle for analyzing the adversarially attacked data set.

Thus, even adversarially attacked data sets can be easily cleaned-up.

According to the second aspect, the invention provides an electronic control unit comprising: a memory, in which a program code is stored, and a computing unit, wherein when carrying out the program code by the computing unit, a method is performed as described above. With the help of the inventive electronic control unit the same advantages can be achieved as with the help of the inventive method described above. Full reference is made to these advantages in the present case.

The invention provides, according to the third aspect, a vehicle comprising a corresponding electronic control unit. With the help of the inventive vehicle, the same advantages can be achieved as with the help of the inventive method described above. Full reference is made to these advantages in the present case.

According to the fourth aspect, the invention provides a computer program product comprising a program code for carrying out a method as described above. With the help of the inventive computer program product the same advantages can be achieved as with the help of the inventive method described above. Full reference is made to these advantages in the present case.

The invention and its further developments as well as its advantages will be explained in more detail below using figures. The figures show schematically:
- Fig. 1: a schematic diagram to explain an inventive method,
- Fig. 2: a schematic diagram to explain the training of neural networks within the meaning of the invention, wherein the training is used to learn differences of frequency spectrums of clean data sets and frequency spectrums of adversarially attacked data sets in a frequency space,
- Fig. 3: a schematic diagram to explain how to build and how to use a denoising filter within the meaning of the invention, and
- Fig. 4: a schematic threshold within the meaning of the invention.

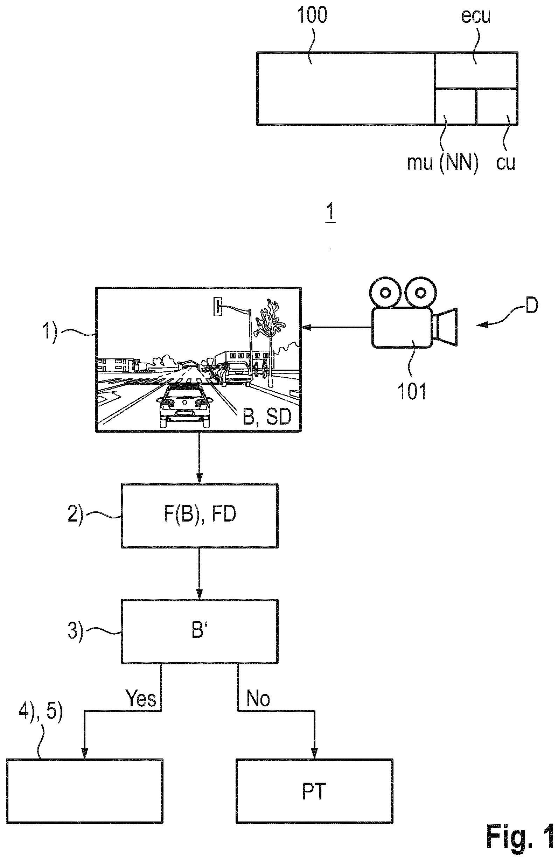

Figure 1 shows a schematic diagram for explanation of a method according to the invention. The method serves for controlling a driver assistance system 100 during operation of a, especially partially automated, fully automated or autonomous, vehicle 1 in order to prevent processing of adversarially attacked data during operating the vehicle, which can lead to malfunction of the driver assistance system 100 and crucial safety problems in the vehicle 1.

The driver assistance system 100 within the meaning of the invention can comprise following elements: at least one or more sensor 101 for observing an environment of the vehicle 1 and an electronic control unit ecu using a, preferably at least one, neural network NN (preferably a deep neural network DNN) for analyzing sensor data D of the sensor 101 and providing perception tasks PT for the vehicle 1 based on the analyzed sensor data D.

As figure 1 shows, the method comprising the following steps:
1) providing a data set B of the sensor data D by the sensor 101 in a spatial domain SD, for example in form of a picture of the environment of the vehicle (1), also called an input image,
2) transforming the data set B of the sensor data D by the electronic control unit ecu using frequency analysis into a frequency spectrum F(B) in a frequency domain FD,
3) analyzing the frequency spectrum F(B) of the data set B in order to detect an adversarially attacked data set B' (or in other words to identify the data set B as an adversarially attacked data set B' or as a clean data set B), especially before analyzing the sensor data D for providing perception tasks PT for the vehicle 1.

Advantageously, the steps of the method according to the invention can be carried out simultaneously and/or repeatedly to allow a flowing process for subsequent obtained data sets B by the sensor 101.

The driver assistance systems 100 according to the invention can serve for automated lighting, adaptive cruise control, assist in avoiding collisions, incorporate satnav/traffic warnings, alert drivers to possible obstacles, assist in lane departure and lane centering and/or provide navigational assistance.

The driver assistance systems 100 can be used for partial- or fully automated driving. Advantageously, the driver assistance systems 100 can use machine learning (based on neural networks NN) to capture the vehicle surroundings, including objects, pedestrians and other vehicles.

The driver assistance systems 100 can use different types of sensor data (camera, radar, lidar) which can be processed by neural networks NN in order to produce an environment model of the vehicle surrounding. The neural networks NN can be preferably used for different tasks such as semantic segmentation or object detection.

The sensor 101 data can detect optical, acoustical and/or electromagnetic waves. The data sets B can be provided as input images, using sensor data D of one or more sensors 101.

The figure 1 shows schematically a sensor 101 in the form of a camera. The data set B in this case is a picture of the environment of the vehicle 1. The whole vehicle 1 is not shown in the figures only on the grounds of simplicity.

The frequency analysis can be used to receive a discrete spectrum of frequencies, that is frequency spectrum F(B) of the input image. The techniques of the frequency analysis can be, for example, discrete Fourier transformation DFT (more specifically 3D discrete Fourier transformation DFT), a discrete cosine transformation, Wavelet transformation and so on.

The frequency analysis of the input images can be preferably executed before the input images are given to the neural network NN for processing the sensor data D.

The data set B being transformed to the frequency space using, for example, a discrete Fourier transformation DFT can be visualized in the frequency space by its frequency spectrum F(B). The data sets B (such as input images) often consist of many points, indicating low frequency and high frequency points along different directions of the input image.

Whereas the adversarially attacked data sets B' look quite similar to their clean counterparts in the spatial domain SD, the frequency spectrums F(B') of adversarially attacked data sets B' look quite different in the frequency domain FD compared to the denoised frequency spectrums F*(B). This is because an adversarial attack uses an adversarial noise N (usually like linear noise in signal processing) which can pass across the target neural network without strong changes in the data set in the spatial domain SD. The adversarial noise N passes different layers typically used in the neural network, but lead to noticeable artifacts in the frequency domain FD. Since, every adversarial image has the adversarial noise N added on top, these adversarial images tend to have visibly different frequency spectrums F(B') from their clean counterparts F(B). Based on this finding, the invention provides in step 3) different approaches or different kinds of detectors, that can precisely recognize the patterns in the frequency domain FD indicative of adversarial noise N.

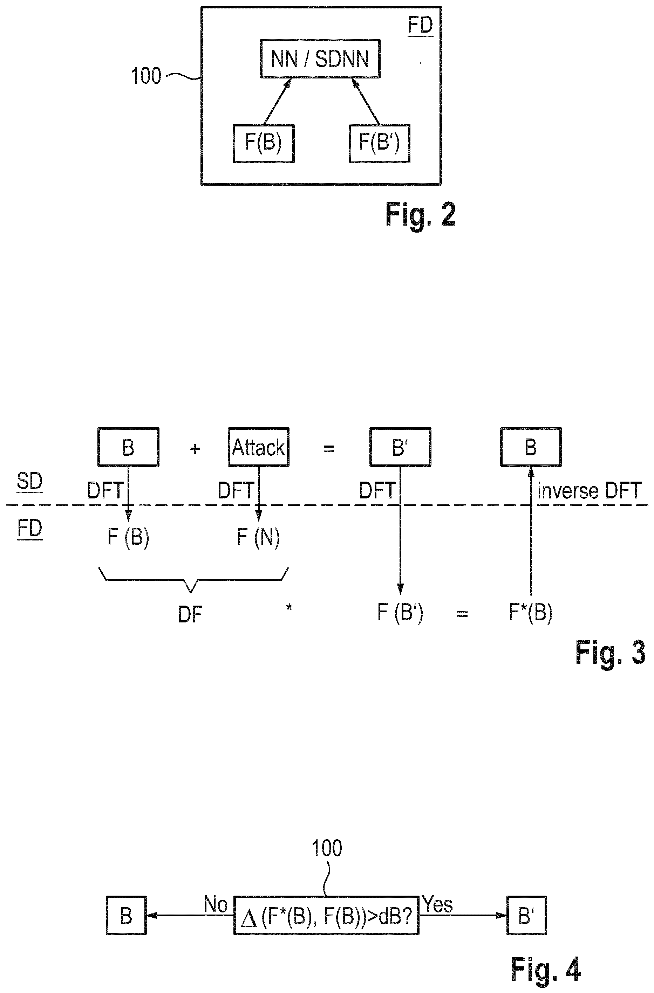

Possible approaches for detection the adversarially attacked data sets B' in step 3) can include the following kinds of detectors, using the frequency spectrum F(B) of the data sets B shown in figures 2 and 3:
A first detector is shown schematically in figure 2. The first detector provides: training a special detecting neural network SDNN (or even the same neural network NN, which is also used for providing perception tasks PT for the vehicle 1, if possible) for classification on clean data sets B and adversarially attacked data sets B' using different kinds of adversarial attacks (all in the frequency domain FD). In this way, the network SDNN or NN can learn the differences Δ(F(B), F(B')) in frequency space of frequency spectrums F(B), F(B') of clean and adversarially attacked images. The clean and adversarially attacked images are represented in the frequency domain FD by its frequency spectrums F(B), F(B').

A second detector is shown schematically in figure 3. The second detector provides: deriving a denoising filter DF, such as a Wiener filter, based on the adversarial noise N in the frequency domain FD using different kinds of adversarial attacks. The Wiener filter can also be used as a denoising filter DF for denoising images in the frequency domain of linear additive noise (see also figure 1, especially step 5)). Such a filter can also be adapted for the adversarial attack problem. The denoising filter DF, such as the Wiener filter, can be derived in a statistical fashion by estimating the signal-to-noise-ratios for the attacked data sets B' from their clean counterparts B: $DF = \frac{{\left|F\left(B\right)\right|}^{2}}{{\left|F\left(B\right)\right|}^{2} + {\left|F\left(N\right)\right|}^{2}} .$

N represents the adversarial noise N. These estimated signal-to-noise-ratios can then be used to denoise input images from the adversarial frequencies in a multiplicative manner in the frequency domain FD: $DF * F \left(B′\right) = F * \left(B\right) .$

An inverse transformation (inverse DFT) of a denoised frequency spectrum F*(B) can then be used to convert the denoised frequency spectrum F*(B) back to the spatial domain SD. Thus, a cleaned-up data set B can be received.

Advantageously, since the denoising filter DF only suppresses adversarial frequencies, they do not modify clean images significantly, as these images are devoid of adversarial frequencies in the first place. As figure 4 shows, the derived denoising filter DF can then be applied to any clean data set B or attacked data set B'.

Further, the figure 4 shows that a threshold dB on a difference Δ(F(B), F*(B)) between the frequency spectrum F(B) of the data sets B and the denoised frequency spectrum F*(B) can be used as an adversarial attack detector.

More specifically, the inventive method can compute metrics such as structural similarity index measure (SSIM) and/or mean squared error (MSE) on the frequency spectrums F(B) of the data sets B and the denoised frequency spectrums F*(B) and apply corresponding thresholds on these values. Since, the attacked images are changed more drastically compared to the clean images, they lead to a greater SSIM increase, and a correspondingly to a greater MSE decrease due to denoising, when compared to clean images.

Using any of the detectors according to figure 2 or figure 3 (or potentially other approaches based on frequency space analysis), the invention provides a method to detect adversarial attacks of the input images. As figure 1 shows, the method can then be applied before (in a pre-processing step) the neural network NN is used for building the environment model of the vehicle 1 (that is to provide perception tasks PT).

If in step 3) an adversarially attacked data set B' is detected, the driver assistance system 100 can execute the following safety mechanism:
5) activating a security mechanism against an adversarial attack.

If in step 3) an adversarially attacked data set B' is detected, the driver assistance system 100 can execute a number of follow-up safety mechanisms:
4) initiating an emergency maneuver

The emergency maneuver in step 4) can comprise at least one of the following measures:
- reducing vehicle speed,
- initiating an emergency stop,
- providing an alarm inside and/or outside of the vehicle 1,
- activating a manual driving mode, and/or
- deactivate the driver assistance system 100.

The security mechanism in step 5) against an adversarial attack can comprise at least one of the following measures:
- activating a pre-processing technique to remove adversarial attack from the data set B,
- using a denoising filter DF for denoising the adversarially attacked data set B',
- using a hardened neural network for analyzing the adversarially attacked data set B',
- using multiple other neural networks with different architectures in an ensemble and performing a consolidation of their output for analyzing the adversarially attacked data set B',
- applying rule-based technique for analyzing the adversarially attacked data set B', i.e. using external, human-readable devices,
- requesting a user of the vehicle for analyzing the adversarially attacked data set B'.

The inventive method scales to multiple attack types as every attack performs a kind of an iterative gradient based noise processing (both forward and backward passes), which leads to detectable patterns in the frequency domain captured precisely by the Wiener filters or the neural network used for detection.

The inventive method will also work well on clean images, as Wiener filters by design would not modify the clean images as such, as clean images (in the frequency domain) are devoid of adversarial frequencies. Thus, if even the Wiener filter is used instead of the first detector, the clean images are left unchanged and there is no negative impact of both detectors.

The inventive method also scales across different attack strengths, as the strength of the noise in the spatial domain does not modify patterns in the frequency domain.

The inventive method offers practical usage, as only a single attack filter would work well across different attack types, hence it is computationally cheap.

An electronic control unit ecu comprising: a memory unit mu, in which a program code is stored, and a computing unit cu, wherein when carrying out the program code by the computing unit cu, a method is performed as described above, provides the second aspect of the invention. In other words, the electronic control unit ecu is configured in such a way to execute the method as described above.

The vehicle 10 comprising a corresponding electronic control unit ecu provides the third aspect of the invention.

Also, a computer program product comprising a program code for carrying out a method as described above provides an aspect of the invention.

The above description of the figures describes the present invention only in the context of examples. Of course, individual features of the embodiments can be combined with each other, provided it is technically reasonable, without leaving the scope of the claimed invention.

### Reference signs

- 100: driver assistance system
- 101: sensor

- 1: vehicle

- ecu: electronic control unit
- cu: computing unit
- mu: memory unit

- D: sensor data
- PT: perception tasks

- B: data set
- B': adversarially attacked data set

- SD: spatial domain
- FD: frequency domain
- F(B): frequency spectrum
- F(B'): frequency spectrum
- F*(B): denoised frequency spectrum
- Δ: difference

- DF: denoising filter
- dB: threshold
- SSIM: structural similarity index measure
- N: adversarial noise

- NN: neural network
- DNN: deep neural network
- SDNN: special detecting neural network

- DFT: discrete Fourier transformation
- Inverse DFT: inverse discrete Fourier transformation

## Claims

1. A method for controlling a driver assistance system (100) during operation of a, especially partially automated, fully automated or autonomous, vehicle (1),
wherein the driver assistance system (100) comprises:
at least one sensor (101) for observing an environment of the vehicle (1) and
an electronic control unit (ecu) using a neural network (NN) for analyzing sensor data (D) of the at least one sensor (101) and providing perception tasks (PT) for the vehicle (1) based on the analyzed sensor data (D), wherein sensor data (D) comprises optical, acoustical and/or electromagnetic data,
the method comprising the following steps:
1) providing a data set (B) of the sensor data (D) by the at least one sensor (101) in a spatial domain (SD),
2) transforming the data set (B) of the sensor data (D) by the electronic control unit (ecu) using frequency analysis into a frequency spectrum (F(B)) in a frequency domain (FD),
3) analyzing the frequency spectrum (F(B)) of the data set (B) in order to detect an adversarially attacked data set (B'),
wherein for detecting the adversarially attacked data set (B') in step 3) a denoising filter (DF) is used for denoising the frequency spectrum (F(B)) of the data set (B) in the frequency domain (FD),
wherein preferably the denoising filter (DF) is built in the frequency domain (FD) using frequency spectrums (F(B)) of clean data sets (B) and noise spectrums (F(N)) of prepared adversarially attacked data sets (B'), preferably using different kinds of adversarial attacks,
wherein, if in step 3) an adversarially attacked data set (B') is detected, at least one following step is provided:
5) activating a security mechanism against an adversarial attack.

2. The method according to claim 1,
**characterized in that**
the method steps 1) to 3) are executed before analyzing the sensor data (D) for providing perception tasks (PT) for the vehicle (1),
and/or the method steps 1) to 3) are executed periodically,
and/or the method steps 1) to 3) are executed for each data set (B) of the sensor data (D) during operation of the vehicle (1).

3. The method according to one of the preceding claims,
**characterized in that**
the sensor data (D) comprise camera, lidar and/or radar data,
and/or the data set (B) is provided as a picture of the environment of the vehicle (1), and/or the electronic control unit (ecu) uses a deep neural network (DNN) as the neural network (NN) for analyzing the sensor data (D) of the at least one sensor (101) and for providing perception tasks (PT) for the vehicle (1) based on the analyzed sensor data (D).

4. The method according to one of the preceding claims,
**characterized in that**
the frequency analysis in step 2) is provided by a discrete Fourier transformation (DFT), a discrete cosine transformation and/or Wavelet transformation.

5. The method according to one of the preceding claims,
**characterized in that**
for detecting the adversarially attacked data set (B') in step 3) the neural network (NN) is used, which is also used for analyzing the sensor data (D) of the at least one sensor (101) and for providing perception tasks (PT) for the vehicle (1),
and/or for detecting the adversarially attacked data set (B') in step 3) a special detecting neural network (SDNN) is used.

6. The method according to the preceding claim,
**characterized in that**
the neural network (NN) and/or the special detecting neural network (SDNN) used for detecting the adversarially attacked data set (B')
will be trained in the frequency domain (FD) on frequency spectrums (F(B)) of clean data sets (B) and on frequency spectrums (F(B')) of prepared adversarially attacked data sets (B'), especially using different kinds of adversarial attacks,
in order to learn differences Δ(F(B), F(B')) between the frequency spectrums (F(B)) of the clean data sets (B) and the frequency spectrums (F(B')) of the adversarially attacked data sets (B') in the frequency domain (FD).

7. The method according to one of the preceding claims,
**characterized in that**
the denoising filter (DF) is a Wiener filter.

8. The method according to one of the preceding claims,
**characterized in that**
for detecting the adversarially attacked data set (B') in step 3) the frequency spectrum (F(B)) of the data set (B) will be compared with a denoised frequency spectrum (F*(B)),
wherein especially a threshold (dB) will be applied by comparing the frequency spectrum (F(B)) of the data set (B) with the denoised frequency spectrum (F*(B)),
wherein preferably the attacked data sets (B') will be detected if a difference (Δ(F(B), F*(B)) between the frequency spectrum (F(B)) of the data set (B) and the denoised frequency spectrum (F*(B)) is greater than the applied threshold (dB).

9. The method according to one of the preceding claims,
**characterized in that**
if in step 3) an adversarially attacked data set (B') is detected, at least one following step is provided:
4) initiating an emergency maneuver.

10. The method according to one of the preceding claims,
**characterized in that**
the emergency maneuver comprising at least one of the following measures:
- reducing vehicle speed,
- initiating an emergency stop,
- providing an alarm inside and/or outside of the vehicle (1),
- activating a manual driving mode, and/or
- deactivate the driver assistance system (100).

11. The method according to one of the preceding claims,
**characterized in that**
the security mechanism against an adversarial attack comprising at least one of the following measures:
- activating a pre-processing technique to remove adversarial attack from the data set (B),
- using a denoising filter (DF) for cleaning the adversarially attacked data set (B'),
- using a hardened neural network for analyzing the adversarially attacked data set (B'),
- using multiple other neural networks with different architectures in an ensemble and performing a consolidation of their output for analyzing the adversarially attacked data set (B'),
- applying rule-based technique for analyzing the adversarially attacked data set (B'), especially using external, human-readable devices,
- requesting a user of the vehicle (1) for analyzing the adversarially attacked data set (B').

12. An electronic control unit (ecu) comprising:
a memory unit (mu), in which a program code is stored, and
a computing unit (cu), wherein when carrying out the program code by the computing unit (cu), a method according to one of the proceeding claims is performed.

13. A vehicle (1) comprising an electronic control unit (ecu) according to the preceding claim.

14. A computer program product comprising instructions which, when the program is executed by a computer, cause the computer to carry out a method according to one of the proceeding claims 1 to 11.

## Patentansprüche

1. Verfahren zum Steuern eines Fahrerassistenzsystems (100) während des Betriebs eines,
insbesondere teilautomatisierten, vollautomatisierten oder autonomen Fahrzeugs (1),
wobei das Fahrerassistenzsystem (100) umfasst:
mindestens einen Sensor (101) zum Beobachten einer Umgebung des Fahrzeugs (1) und
eine elektronische Steuereinheit (ecu) unter Verwendung eines neuronalen Netzwerks (NN) zur Analyse von Sensordaten (D) des mindestens einen Sensors (101) und zum Bereitstellen von Wahrnehmungsaufgaben (PT) für das Fahrzeug (1) basierend auf den analysierten Sensordaten (D), wobei die Sensordaten (D) optische, akustische und/oder elektromagnetische Daten umfassen, das Verfahren umfassend die folgenden Schritte:
1) Bereitstellen eines Datensatzes (B) der Sensordaten (D) durch den mindestens einen Sensor (101) in einem Raumbereich (SD),
2) Transformieren des Datensatzes (B) der Sensordaten (D) durch die elektronische Steuereinheit (ecu) mittels Frequenzanalyse in ein Frequenzspektrum (F(B)) in einem Frequenzbereich (FD),
3) Analysieren des Frequenzspektrums (F(B)) des Datensatzes (B), um einen feindlich angegriffenen Datensatz (B') zu erkennen,
wobei zum Erkennen des feindlich angegriffenen Datensatzes (B') in Schritt 3) ein Entrauschungsfilter (DF) zum Entrauschen des Frequenzspektrums (F(B)) des Datensatzes (B) im Frequenzbereich (FD) verwendet wird,
wobei vorzugsweise der Entrauschungsfilter (DF) im Frequenzbereich (FD) unter Verwendung von Frequenzspektren (F(B)) von sauberen Datensätzen (B) und Rauschspektren (F(N)) von vorbereiteten feindlich angegriffenen Datensätzen (B') aufgebaut wird, vorzugsweise unter Verwendung verschiedener Arten von feindlichen Angriffen,
wobei, wenn in Schritt 3) ein feindlich angegriffener Datensatz (B') erkannt wird, mindestens ein folgender Schritt bereitgestellt wird:
5) Aktivieren eines Sicherheitsmechanismus gegen einen feindlichen Angriff.

2. Verfahren nach Anspruch 1,
**dadurch gekennzeichnet, dass**
die Verfahrensschritte 1) bis 3) vor dem Analysieren der Sensordaten (D) zum Bereitstellen von Wahrnehmungsaufgaben (PT) für das Fahrzeug (1) ausgeführt werden,
und/oder die Verfahrensschritte 1) bis 3) periodisch ausgeführt werden,
und/oder die Verfahrensschritte 1) bis 3) für jeden Datensatz (B) der Sensordaten (D) während des Betriebs des Fahrzeugs (1) ausgeführt werden.

3. Verfahren nach einem der vorstehenden Ansprüche,
**dadurch gekennzeichnet, dass**
die Sensordaten (D) Kamera-, Lidar- und/oder Radardaten umfassen,
und/oder der Datensatz (B) als ein Bild der Umgebung des Fahrzeugs (1) bereitgestellt wird, und/oder die elektronische Steuereinheit (ecu) ein tiefes neuronales Netzwerk (DNN) als das neuronale Netzwerk (NN) zum Analysieren der Sensordaten (D) des mindestens einen Sensors (101) und zum Bereitstellen von Wahrnehmungsaufgaben (PT) für das Fahrzeug (1) basierend auf den analysierten Sensordaten (D) verwendet.

4. Verfahren nach einem der vorstehenden Ansprüche,
**dadurch gekennzeichnet, dass**
die Frequenzanalyse in Schritt 2) durch eine diskrete FourierTransformation (DFT), eine diskrete Kosinustransformation und/oder Wavelet-Transformation bereitgestellt wird.

5. Verfahren nach einem der vorstehenden Ansprüche,
**dadurch gekennzeichnet, dass**
zum Erkennen des feindlich angegriffenen Datensatzes (B') in Schritt 3) das neuronale Netzwerk (NN) verwendet wird, das auch zum Analysieren der Sensordaten (D) des mindestens einen Sensors (101) und zum Bereitstellen von Wahrnehmungsaufgaben (PT) für das Fahrzeug (1) verwendet wird, und/oder zum Erkennen des feindlich angegriffenen Datensatzes (B') in Schritt 3) ein spezielles erkennendes neuronales Netzwerk (SDNN) verwendet wird.

6. Verfahren nach dem vorstehenden Anspruch,
**dadurch gekennzeichnet, dass**
das neuronale Netzwerk (NN) und/oder das spezielle erkennende neuronale Netzwerk (SDNN), das zum Erkennen des feindlich angegriffenen Datensatzes (B') verwendet wird,
im Frequenzbereich (FD) an Frequenzspektren (F(B)) von sauberen Datensätzen (B) und an Frequenzspektren (F(B')) von vorbereiteten, feindlich angegriffenen Datensätzen (B') trainiert wird/werden, insbesondere unter Verwendung verschiedener Arten von feindlich Angriffen,
um Differenzen Δ(F(B), F(B')) zwischen den Frequenzspektren (F(B)) der sauberen Datensätze (B) und den Frequenzspektren (F(B')) der feindlich angegriffenen Datensätze (B') im Frequenzbereich (FD) zu lernen.

7. Verfahren nach einem der vorstehenden Ansprüche,
**dadurch gekennzeichnet, dass**
der Entrauschungsfilter (DF) ein Wiener-Filter ist.

8. Verfahren nach einem der vorstehenden Ansprüche,
**dadurch gekennzeichnet, dass**
zum Erkennen des feindlich angegriffenen Datensatzes (B') in Schritt 3)
das Frequenzspektrum (F(B)) des Datensatzes (B) mit einem entrauschten Frequenzspektrum (F*(B)) verglichen wird,
wobei insbesondere ein Schwellenwert (dB) durch Vergleichen des Frequenzspektrums (F(B)) des Datensatzes (B) mit dem entrauschten Frequenzspektrum (F*(B)) angewendet wird,
wobei vorzugsweise die angegriffenen Datensätze (B') erkannt werden, wenn eine Differenz (Δ(F(B), F*(B)) zwischen dem Frequenzspektrum (F(B)) des Datensatzes (B) und dem entrauschten Frequenzspektrum (F*(B)) größer als der angewendete Schwellenwert (dB) ist.

9. Verfahren nach einem der vorstehenden Ansprüche,
**dadurch gekennzeichnet, dass**
wenn in Schritt 3) ein feindlich angegriffener Datensatz (B') erkannt wird, mindestens ein folgender Schritt bereitgestellt wird:
4) Einleiten eines Notfallmanövers.

10. Verfahren nach einem der vorstehenden Ansprüche,
**dadurch gekennzeichnet, dass**
das Notfallmanöver mindestens eine der folgenden Maßnahmen umfasst:
- Verringern der Fahrzeuggeschwindigkeit,
- Einleiten eines Nothalts,
- Bereitstellen eines Alarms innerhalb und/oder außerhalb des Fahrzeugs (1),
- Aktivieren eines manuellen Fahrmodus, und/oder
- Deaktivieren des Fahrerassistenzsystems (100).

11. Verfahren nach einem der vorstehenden Ansprüche,
**dadurch gekennzeichnet, dass**
der Sicherheitsmechanismus gegen einen feindlichen Angriff, mindestens eine der folgenden Maßnahmen umfasst:
- Aktivieren einer Vorverarbeitungstechnik, um einen feindlichen Angriff aus dem Datensatz (B) zu entfernen,
- Verwenden eines Entrauschungsfilters (DF) zum Bereinigen des feindlich angegriffenen Datensatzes (B'),
- Verwenden eines gehärteten neuronalen Netzwerks zum Analysieren des feindlich angegriffenen Datensatzes (B'),
- Verwenden mehrerer anderer neuronaler Netzwerke mit unterschiedlichen Architekturen in einem Ensemble und Durchführen einer Konsolidierung ihrer Ausgaben zum Analysieren des feindlich angegriffenen Datensatzes (B'),
- Anwenden einer regelbasierten Technik zum Analysieren des feindlich angegriffenen Datensatzes (B'), insbesondere unter Verwendung externer, menschenlesbarer Vorrichtungen,
- Auffordern eines Benutzers des Fahrzeugs (1) zum Analysieren des feindlich angegriffenen Datensatzes (B').

12. Elektronische Steuereinheit (ecu), umfassend:
eine Speichereinheit (mu), in der ein Programmcode gespeichert ist, und
eine Recheneinheit (cu), wobei beim Ausführen des Programmcodes durch die Recheneinheit (cu) ein Verfahren nach einem der vorstehenden Ansprüche durchgeführt wird.

13. Fahrzeug (1), umfassend eine elektronische Steuereinheit (ecu) nach dem vorstehenden Anspruch.

14. Computerprogrammprodukt, umfassend Anweisungen, die, wenn das Programm durch einen Computer ausgeführt wird, bewirken, dass der Computer ein Verfahren nach einem der Ansprüche 1 bis 11 ausführt.

## Revendications

1. Procédé permettant de commander un système d'aide à la conduite (100) pendant le fonctionnement d'un,
véhicule (1) en particulier partiellement automatisé, entièrement automatisé ou autonome,
dans lequel le système d'aide à la conduite (100) comprend :
au moins un capteur (101) pour observer un environnement du véhicule (1) et
une unité de commande électronique (ecu) utilisant un réseau neuronal (NN) pour analyser des données de capteur (D) de l'au moins un capteur (101) et fournir des tâches de perception (PT) pour le véhicule (1) sur la base des données de capteur analysées (D), dans lequel les données de capteur (D) comprennent des données optiques, acoustiques et/ou électromagnétiques, le procédé comprenant les étapes suivantes :
1) la fourniture d'un ensemble de données (B) des données de capteur (D) par l'au moins un capteur (101) dans un domaine spatial (SD),
2) la transformation de l'ensemble de données (B) des données de capteur (D) par l'unité de commande électronique (ecu) à l'aide d'une analyse fréquentielle en un spectre de fréquences (F(B)) dans un domaine fréquentiel (FD),
3) l'analyse du spectre de fréquences (F(B)) de l'ensemble de données (B) afin de détecter un ensemble de données attaqué de manière antagoniste (B'),
dans lequel, pour détecter l'ensemble de données attaqué de manière antagoniste (B') à l'étape 3), un filtre de débruitage (DF) est utilisé pour débruiter le spectre de fréquences (F(B)) de l'ensemble de données (B) dans le domaine fréquentiel (FD),
dans lequel, de préférence, le filtre de débruitage (DF) est construit dans le domaine fréquentiel (FD) à l'aide des spectres de fréquences (F(B)) d'ensembles de données propres (B) et des spectres de bruit (F(N)) d'ensembles de données préparés attaqués de manière antagoniste (B'), de préférence à l'aide de différentes sortes d'attaques antagonistes,
dans lequel, si à l'étape 3) un ensemble de données attaqué de manière antagoniste (B') est détecté, au moins une étape suivante est prévue :
5) l'activation d'un mécanisme de sécurité contre une attaque antagoniste.

2. Procédé selon la revendication 1,
**caractérisé en ce que**
les étapes de procédé 1) à 3) sont exécutées avant d'analyser les données de capteur (D) pour fournir des tâches de perception (PT) pour le véhicule (1),
et/ou les étapes de procédé 1) à 3) sont exécutées périodiquement,
et/ou les étapes de procédé 1) à 3) sont exécutées pour chaque ensemble de données (B) des données de capteur (D) pendant le fonctionnement du véhicule (1).

3. Procédé selon l'une des revendications précédentes,
**caractérisé en ce que**
les données de capteur (D) comprennent des données de caméra, de lidar et/ou de radar,
et/ou l'ensemble de données (B) est fourni comme image de l'environnement du véhicule (1), et/ou l'unité de commande électronique (ecu) utilise un réseau neuronal profond (DNN) comme réseau neuronal (NN) pour analyser les données de capteur (D) de l'au moins un capteur (101) et pour fournir des tâches de perception (PT) pour le véhicule (1) sur la base des données de capteur analysées (D).

4. Procédé selon l'une des revendications précédentes,
**caractérisé en ce que**
l'analyse fréquentielle à l'étape 2) est fournie par une transformation de Fourier discrète (DFT), une transformation en cosinus discrète et/ou une transformation en ondelette.

5. Procédé selon l'une des revendications précédentes,
**caractérisé en ce que**
pour détecter l'ensemble de données attaqué de manière antagoniste (B') à l'étape 3) le réseau neuronal (NN) est utilisé, lequel est également utilisé pour analyser les données de capteur (D) de l'au moins un capteur (101) et pour fournir des tâches de perception (PT) pour le véhicule (1),
et/ou pour détecter l'ensemble de données attaqué de manière antagoniste (B') à l'étape 3) un réseau neuronal de détection spécial (SDNN) est utilisé.

6. Procédé selon la revendication précédente,
**caractérisé en ce que**
le réseau neuronal (NN) et/ou le réseau neuronal de détection spécial (SDNN) utilisés pour détecter l'ensemble de données attaqué de manière antagoniste (B')
sera entraîné dans le domaine fréquentiel (FD) sur des spectres de fréquences (F(B)) d'ensembles de données propres (B) et sur des spectres de fréquences (F(B')) d'ensembles de données préparés attaqués de manière antagoniste (B'), en particulier à l'aide de différents types d'attaques antagonistes,
afin d'apprendre des différences Δ(F(B), F(B')) entre les spectres de fréquences (F(B)) des ensembles de données propres (B) et les spectres de fréquences (F(B')) des ensembles de données attaqués de manière antagoniste (B') dans le domaine fréquentiel (FD).

7. Procédé selon l'une des revendications précédentes,
**caractérisé en ce que**
le filtre de débruitage (DF) est un filtre de Wiener.

8. Procédé selon l'une des revendications précédentes,
**caractérisé en ce que**
pour détecter l'ensemble de données attaqué de manière antagoniste (B') à l'étape 3)
le spectre de fréquences (F(B)) de l'ensemble de données (B) sera comparé à un spectre de fréquences débruité (F*(B)),
dans lequel en particulier un seuil (dB) sera appliqué en comparant le spectre de fréquences (F(B)) de l'ensemble de données (B) avec le spectre de fréquences débruité (F*(B)),
dans lequel, de préférence, les ensembles de données attaqués (B') seront détectés si une différence (Δ(F(B), F*(B)) entre le spectre de fréquences (F(B)) de l'ensemble de données (B) et le spectre de fréquences débruité (F*(B)) est supérieure au seuil appliqué (dB).

9. Procédé selon l'une des revendications précédentes,
**caractérisé en ce que**
si à l'étape 3) un ensemble de données attaqué de manière antagoniste (B') est détecté, au moins une étape suivante est prévue :
4) le déclenchement d'une manœuvre d'urgence.

10. Procédé selon l'une des revendications précédentes,
**caractérisé en ce que**
la manœuvre d'urgence comprenant au moins l'une des mesures suivantes :
- la réduction de la vitesse du véhicule,
- le déclenchement d'un arrêt d'urgence,
- la fourniture d'une alarme à l'intérieur et/ou à l'extérieur du véhicule (1),
- l'activation d'un mode de conduite manuel, et/ou
- la désactivation du système d'aide à la conduite (100).

11. Procédé selon l'une des revendications précédentes,
**caractérisé en ce que**
le mécanisme de sécurité contre une attaque antagoniste comprenant au moins l'une des mesures suivantes :
- l'activation d'une technique de prétraitement pour éliminer une attaque antagoniste de l'ensemble de données (B),
- l'utilisation d'un filtre de débruitage (DF) pour nettoyer l'ensemble de données attaqué de manière antagoniste (B'),
- l'utilisation d'un réseau neuronal durci pour analyser l'ensemble de données attaqué de manière antagoniste (B'),
- l'utilisation de plusieurs autres réseaux neuronaux avec des architectures différentes dans un ensemble et la réalisation d'une consolidation de leurs sorties pour analyser l'ensemble de données attaqué de manière antagoniste (B'),
- l'application d'une technique basée sur des règles pour analyser l'ensemble de données attaqué de manière antagoniste (B'), en particulier à l'aide de dispositifs externes lisibles par l'homme,
- la demande à un utilisateur du véhicule (1) d'analyser l'ensemble de données attaqué de manière antagoniste (B').

12. Unité de commande électronique (ecu) comprenant :
une mémoire (mu), dans laquelle est stocké un code de programme, et
une unité de calcul (CU), dans laquelle, lors de la mise en œuvre du code de programme par l'unité de calcul (CU), un procédé selon l'une des revendications précédentes est réalisé.

13. Véhicule (1) comprenant une unité de commande électronique (ecu) selon la revendication précédente.

14. Produit-programme d'ordinateur comprenant des instructions, qui lorsque le programme est exécuté par un ordinateur, amènent l'ordinateur à mettre en œuvre le procédé selon l'une quelconque des revendications 1 à 11.
